# EUROPEAN PATENT SPECIFICATION

(11) **EP 3 421 411 B1**
(45) Date of publication and mention of the grant of the patent: **10.11.2021**
(21) Application number: 17305844.7
(22) Date of filing: 30.06.2017
(51) Int. Cl.: B67C 3/06, B67C 3/10

(54) **FILLING UNIT FOR FILLING AN ARTICLE WITH A POURABLE PRODUCT**
FÜLLEINHEIT ZUM FÜLLEN EINES ARTIKELS MIT EINEM FLIESSFÄHIGEN PRODUKT
UNITÉ DE REMPLISSAGE D'UN ARTICLE AVEC UN PRODUIT VERSABLE

(43) Date of publication of application: 02.01.2019
(73) Proprietor: Sidel Participations, 76930 Octeville-sur-Mer (FR)
(72) Inventor: CENCI, Mattia, 43126 Parma (IT)
(74) Representative: Sidel Group

(56) References cited:
- EP-A1- 2 871 150
- EP-A1- 3 020 679
- DE-A1-102008 030 292

## Description

The present invention relates to a filling unit for contact filling an article with a still pourable product, especially a still pourable food product.

Also described is a filling method for contact filling an article with the still pourable product, especially a still pourable food product.

Also described is a method of updating a filling unit for contact or contactless filling an article with a pourable product to a filling unit for contact filling article with a still product.

In greater detail, the term "still" indicates that the pourable product does not contain carbon dioxide.

Known article-handling machines comprise a filling station fed with empty articles and adapted to output articles filled with the pourable food product.

The filling unit substantially comprises a carousel conveyor rotating about a rotation axis, a tank containing the pourable food product, and a plurality of filling devices supported by the carousel conveyor in a position radially external with respect to the rotation axis of the carousel conveyor.

In greater detail, the carousel is provided with a plurality of support elements for respective articles provided to arrange the mouths of respective articles in a lower position with respect to the respective filling devices and to displace the articles along a circumferential arc trajectory about the rotation axis integrally to the respective filling devices.

Each filling device essentially comprises a fixed body connected to the carousel and a shutter sliding with respect to the fixed body between an open configuration and a closed configuration.

In greater detail, when it is arranged in the open configuration, the shutter defines an opening with the fixed body. The pourable product thereby flows from the tank to a filling mouth of the relative article passing through the opening.

Differently, when the shutter is arranged in the closed configuration, it sealingly cooperates with an abutment surface defined by the fixed body, thus preventing the pourable product from flowing from tank towards the mouth of the relative article.

In case of contact filling, the mouth of each article is tight-fluid pressed against the body of the respective filling device.

Known from EP-A-3020679 is device for filling a container with a carbonated product, comprising a filling valve for filling a container, a relief arrangement with a relief valve for relieving excess pressure in the filled container, and a sterile area in which at least one outlet opening of the filling valve is mounted for connection to a container opening of the container to be filled. The relief arrangement for relieving the excess pressure into the sterile area communicates with the sterile area (6). The relief arrangement has a relief channel with an outlet opening, and the outlet opening of the relief channel leads into the sterile area and is connected to a sterile outgoing air pipe system of the sterile area.

Known from EP-A-2871150, in the name of the same Applicant, is a filling station , which is provided with a plurality of filling devices capable of contact or contactless filling a plurality of respective articles.

In the case of contact filling with carbonated food products, the filling device is required to carry out a plurality of additional operations on the articles, in addition to the filling with the pourable food product.

In greater detail, the articles undergo a pressurization operation before the filling thereof with the pourable food product. Still more precisely, the empty articles are filled with a pressurized gas, so as to render the pressure inside the articles equal to the pressure of the pourable product, during the filling operation.

Furthermore, due to the fact that the inner volume of each article is in tight-fluid contact with the body of the respective filling device, the latter is required to allow the gas contained in the articles to escape during the filling of the articles.

In order to meet all these needs, the filling station shown in EP-A-2871150 comprises:
- a tank filled with a pressurization gas and the pourable product;
- a pressurization chamber, which is common to all the filling devices, is fluidly connected with the tank, is fluidly connected with a plurality of first ducts defined by relative filling devices and is connected with an exhaust.
- a return gas chamber, which is common to all the filling devices, is fluidly connected with a plurality of second ducts defined by relative filling devices and is fluidly connected with an exhaust; and
- a de-pressurization chamber, which is common to all the filling devices, is fluidly connected with a plurality of third ducts defined by relative filling devices and is fluidly connected with a drain.

Furthermore, the filling station comprises:
- a plurality of first filling valves, which are interposed along respective first ducts, and can be selectively displaced either in a relative open configuration in which they allow the pressurization gas to flow along relative first ducts or in a relative closed configuration in which they allow that flow along relative first ducts;
- a plurality of second valves, which may be selectively set in respective open configurations in which they allow the gas contained in the inner volumes of respective articles to flow along respective second ducts or in respective closed configurations in which they prevent the gas contained in respective articles from flowing along respective second ducts; and
- a plurality of third valves, which may be selectively set in in respective open configurations in which they allow the gas present in the head-spaces of relative articles to be discharged in the drain along relative third fluidic lines or in respective closed configurations in which they prevent the gas present in the head-spaces of relative articles from flowing along relative third fluidic lines to the drain.

In greater detail, each first duct is fluidly connected to the first opening of relative article, in case of contact filling thereof. Thus, each first duct allows the pressurization of the relative article, when relative first valves are in relative open positions and when the relative shutter is in the closed position before the filling of relative article.

Each second duct is fluidly connected to the inner volume of relative article in case of contact filling thereof. Thus, each second duct allows the return of the gas contained in the relative article, when relative second valves are in respective open positions and when the relative shutter is in the open position.

Each third duct is fluidly connected to the inner volume of relative article in case of contact filling thereof. Thus, each third duct allows the escape of the gas contained in the relative articles, when relative third valves are in respective open positions and when the relative shutter is in the open position.

The exhaust and the drain define access points for potentially contaminant agent towards the inner of the filling station and therefore towards the pourable food product intended to fill the articles.

In case of contact filling with carbonated products, the differential pressure between the pressurization chamber and the exhaust as well as between the de-pressurization chamber and the drain prevents the contaminant agents from entering the inner of the filling station.

However, in case of contact filling with still products, the above-identified differential pressure is lower than in case of contact filling with carbonated products.

This is due to the fact that the articles for still products are weaker than the articles for carbonated products, and to the fact that the still products are delicate and their organoleptic properties may be altered by the exposure to a particularly high pressure.

This lower differential pressure might be not enough to prevent the contaminant agents from entering the inner of the filling station.

A need is therefore felt within the industry to modify the known filling station with the aim of rendering them suitable to contact fill still and delicate food products while at the same time preventing any contamination from the outside of the filling station.

It is an object of the present invention to provide a filling station for contact filling of an article with a still pourable product, which allows to easily and costeffectively meet the above need.

The aforementioned object is achieved by the present invention as it relates to a filling station for contact filling of an article with a still pourable product, as defined in claim 1.

One preferred embodiment is hereinafter disclosed for a better understanding of the present invention, by way of non-limitative example and with reference to the accompanying drawings, in which:
- Figure 1 shows a schematic view of a filling device of the filling unit according to the present invention during a contact filling operation, with parts removed for clarity;
- Figure 2 shows a schematic view of the filling unit of Figure 1 during the contact filling operation, with parts removed for clarity;
- Figure 3 is a top view of the filling unit of Figures 1 and 2; and
- Figure 4 is a perspective view of the filling unit of Figures 1 to 3, with parts removed for clarity.

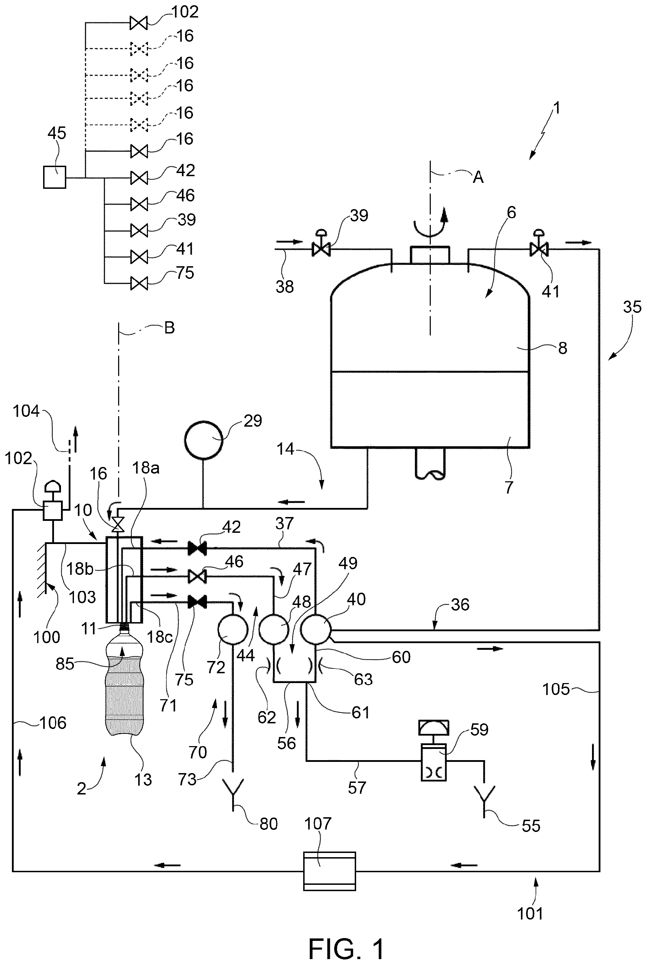

With reference to Figures 1 to 4, numeral 1 indicates a filling unit for filling articles 2 with a pourable product.

Filling unit 1 is adapted to contact fill articles 2 with a still product.

Furthermore, filling unit 1 is a update of a filling adapted either to contactless fill article 2 with a still food product or to contact fill article 2 with a carbonated food product, i.e. a food product containing carbon dioxide.

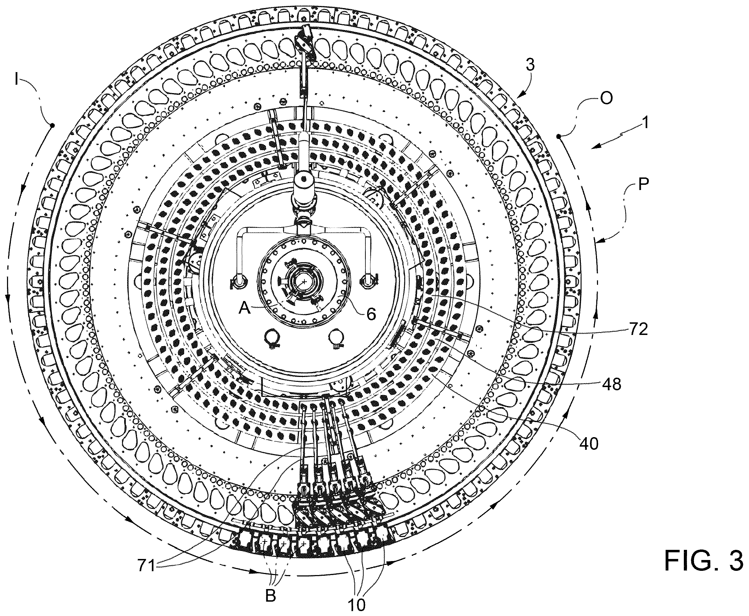

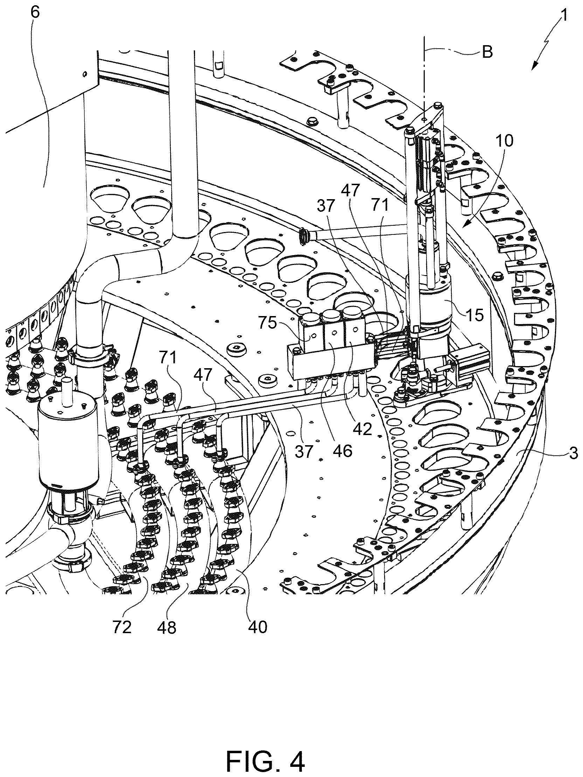

In greater detail, filling unit 1 essentially comprises (Figures 3 and 4):
- a carousel 3 rotating about an axis A, which is vertical in the case shown, along an arc-shaped path P extending from an input station I to an output station O; and
- a plurality of filling devices 10 adapted to fill respective articles 2 with the pourable food product and supported by a peripheral edge external to axis A of carousel 3.

Carousel 3 also includes (Figure 1) a tank 6 common to all filling devices 10 and which comprises a lower portion 7 filled with the pourable food product at a pressure higher than environment pressure and an upper portion 8 filled with a gas.

In particular, gas is a pressurization gas, e.g. air or nitrogen. The gas is flown inside article 2 before the filling thereof, so as to render equal the pressure in the inner volume of articles 2 and the pressure of the pourable product inside portion 7 of tank 6.

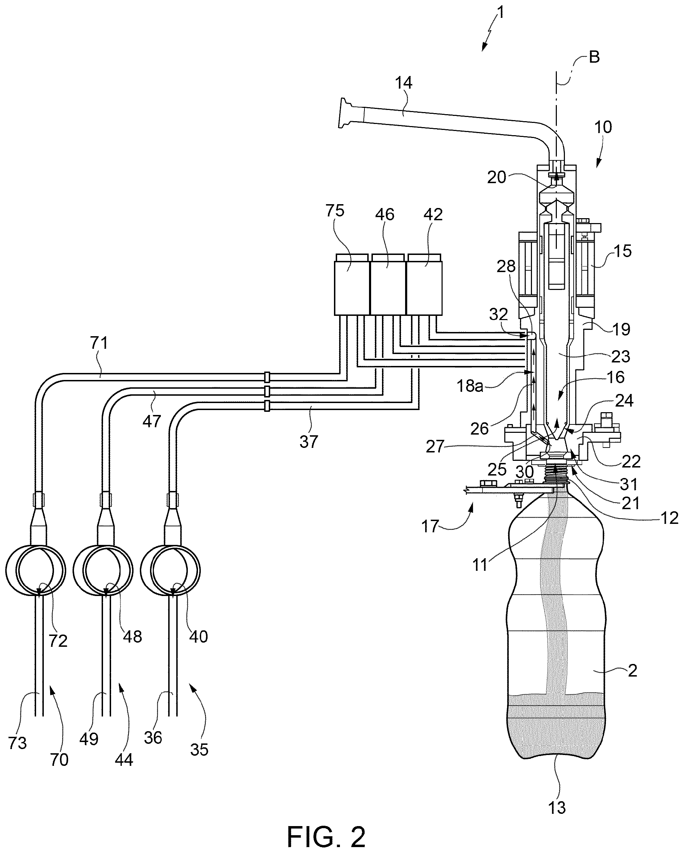

Each article 2 comprises (Figures 1 and 2):
- a mouth 11 adapted to allow the filling of article 2 by means of filling unit 1 and the following pouring of the food product from article 2;
- a neck 12 arranged immediately below mouth 11; and
- a bottom wall 13 opposite to mouth 11.

For simplicity, the following description will refer to only one filling device 10 and to relative article 2, as devices 10 are identical to one another.

Filling device 10 essentially comprises (Figure 1):
- a frame 15 fitted to carousel 3;
- a hollow body 19 which is defined by frame 15 and which extends about an axis B parallel to and staggered from axis A;
- a shutter 16 movable along axis B inside body 19; and
- a gripping device 17 movable along axis B towards and away filling device 10 and configured to grip neck 12 of article 2.

Gripping device 17 is movable together and synchronously with filling device 10 and carousel 3 about axis A.

Furthermore, gripping device 17 is movable parallel to axis B between:
- a lowered rest position (not-shown); and
- a raised operative position (Figures 1 and 2), in which article 2 undergoes a certain number of operations.

Still more precisely, gripping device 17 moves from the lowered rest position to the raised operative position at station I and moves from the raised operative position to the lowered rest position at station O.

Body 19 comprises, in turn, proceeding along axis B:
- an opening 20, which is fluidly connected with lower portion 7 of tank 6;
- an annular protrusion 22, which protrudes towards axis B and defines a conical passage 24 (shown in Figure 3) ;
- an opening 21, which is opposite to opening 20, which faces mouth 11 of article 2 and through which the food product passes during the filling of article 2; and
- a cavity 31 which is interposed along axis B between protrusion 22 and opening 21, and which is bounded, on the opposite side of protrusion 22, by opening 21.

In particular, filling unit 1 comprises, for each filling device 10, a fluidic line 14 interposed between lower portion 7 of tank 6 and openings 20 of filling devices 10, and along which a flow-sensor 29 (shown in Figure 1), a flow-meter in the embodiment shown, is arranged.

Protrusion 22 is axially interposed between openings 20, 21, proceeding along axis B.

Due to the fact that passage 24 is, in a section orthogonal to axis B, shaped as a circle, the food product creates a cylindrical flow of axis B, during the filling of article 2.

In the embodiment shown, shutter 16 comprises:
- a stem 23 which receives a force along axis B; and
- a plunger 25 which is arranged at an end of stem 23 arranged on the side of opening 21.

Plunger 25 is conical of axis B and comprises a conical end on the side of opening 21 shaped correspondingly to the shape of opening 21.

Furthermore, protrusion 22 is conical of axis B and tapers from opening 20 to opening 21.

Shutter 16 is movable relative to body 19 and along axis B between:
- an open configuration (shown in Figure 2), in which it allows the fluidic connection between lower portion 7 of tank 6 and opening 21, thus allowing the filling of article 2 with the food product; and
- a closed configuration (not shown), in which it prevents the fluidic connection between lower portion 7 of tank 6 and opening 21.

In the present description, the expression contact filling indicates a filling modality, in which article 2 is tight-fluidly pressed against body 19 of filling device 10 whereas the expression contactless filling indicates a filling modality, in which article 2 is spaced along axis B from body 19 of filling device 10.

In this way, the food product is prevented from contacting the outer environment in case of contact filling whereas the food product contacts the outer environment in case of contactless filling.

In the embodiment shown, when shutter 16 is in the open configuration, plunger 25 is spaced from protrusion 22 and leaves free passage 24.

On the contrary, when shutter 16 is in the closed configuration, plunger 25 abuts against protrusion 22 and seals passage 24.

Furthermore, mouth 11 of article 2 is tight-fluidly pressed against opening 21 of filling device 10 in case of contact filling, when gripping device 17 is in the raised position.

On the contrary, mouth 11 of article 2 is spaced along axis B from opening 21 of filling device 10 in case of contactless filling, when gripping device 17 is in the raised position.

Body 19 also comprise a plurality, three in the embodiment shown, of ducts 18a, 18b, 18c (only schematically shown in Figure), which extend eccentrically to and on one side only of axis B and are arranged radially outer than shutter 16 with respect to axis B (see Figures 3 and 4).

In detail, each duct 18a, 18b, 18c comprises a relative end opening 30. Openings 30 open inside body 19 in a position axially interposed along axis B between protrusion 22 and opening 21, i.e. inside cavities 31.

In this way, openings 30 are in fluid connection with mouth 11 of article 2, even when shutter 16 is in the closed configuration.

In the embodiment shown, each duct 18a, 18b, 18c comprises:
- a main portion 26 extending parallel to axis B;
- an end portion 27, which is housed inside protrusion 22 and defines opening 30; and
- an end portion 28, which is opposite to portion 26 and defines an opening 32, the function of which will be explained in the following of the present description.

Portion 27 converges towards axis B on the opposite side of portion 26, in the embodiment shown.

Portion 28 is, in the embodiment shown, radial to axis B.

Filling unit 1 also comprises (Figure 1) a plurality of fluidic lines 35, which are adapted to selectively convey the pressurization gas from upper portion 8 of tank 6 inside the inner volume of relative articles 2, in case of contact filling.

Still more precisely, fluidic lines 35 comprise:
- a common portion 36, which originates from portion 8 of tank 6 and which is common to all filling devices 10;
- a pressurization chamber 40, which is common to all filling devices 10;
- relative portions 37, which are associated to respective filling devices 10 and interposed between chamber 40 and openings 32 of relative duct 18a; and
- relative ducts 18a associated to respective filling devices 10, which are in fluidic connection with the inner volumes of respective articles 2, when respective gripping devices 17 are in the relative raised operative positions.

Filling unit 1 also comprises:
- a valve 41 common to all the filling devices 10 and interposed along portion 36 of filling lines 35 between upper portion 8 and chamber 40; and
- a plurality of valves 42 associated to relative filling devices 10 and interposed, each, along portion 37 of relative fluidic line 35.

Valve 41 is a modulating valve and may be selectively arranged in:
- a plurality of open configurations, in which it allows the gas contained in upper portion 8 of tank 6 to flow along portion 36 and towards chamber 40; and
- a closed configuration, in which it prevents the gas contained in upper portion 8 of tank 6 from flowing along portion 36 and towards chamber 40.

The configuration of valve 41 determines the differential pressure between the product contained in portion 7 and the inner volume of article 2, i.e. the environmental pressure. This differential pressure causes the flow of the pourable product along fluidic line 14 when valve 10 is in the open position.

This differential pressure is maximum when valve 41 is in the closed configuration and decreases as valve 41 is opened.

This differential pressure substantial equals the sum of the pressure inside portion 8 of tank 6 and of the hydraulic head of pourable product inside portion 7 of tank 6.

Each valve 42 may be selectively arranged in:
- an open configuration, in which it allows the gas contained in upper portion 8 of tank 6 to flow from chamber 40 towards relative duct 18a and, therefore, relative article 2; and
- a closed configuration, in which it prevents the gas contained in upper portion 8 of tank 6 from flowing from chamber 40 towards relative duct 18a and, therefore, relative article 2.

Filling unit 1 also comprises a control unit 45 (only schematically shown in Figure 1) configured to valves 41, 42 and shutters 16 of filling device 10 in such a way to pressurize articles 2 with gas contained in upper portion 7 of tank 6, before the contact filling of articles 2 with still food product.

To this end, control unit 45 is configured to:
- keep shutters 16 of each filling device 10 in respective closed configuration; and
- set valves 41, 42 in respective open configurations, so as to allow the gas contained in upper portion 8 of tank 6 to flow along fluidic lines 35 and to reach openings 20 and mouths 11 of articles 2 to be filled.

Filling unit 1 also comprises (Figures 1 and 2):
- a duct 38 for feeding upper portion 8 of tank 6 with the gas; and
- a valve 39 arranged along duct 38 upstream of tank 6 and controllable to adjust the amount of gas which enters tank 6.

Filling unit 1 comprises, for each filling device 10 and corresponding article 2,:
- a plurality of fluidic lines 44 for allowing the escaping of the gas contained inside respective articles 2 during the contact filling thereof, which are distinct from fluidic lines 35, and extends from inner volume of article 2 to chamber 40; and
- a plurality of valves 46, which may be selectively set in respective open configurations in which they allow the gas contained in the inner volumes of articles 2 to flow along respective fluidic lines 44 or in respective closed configurations in which they prevent the gas contained in articles 2 from flowing along respective fluidic lines 44.

Control unit 45 is programmed to set shutter 16 of each filling device 10 in the respective open configuration and respective valve 46 in the respective open configuration during the contact filling of respective article 2, so as to allow the gas contained in article 2 to be discharged during the filling of article 2.

In greater detail, during the contact filling of articles 2, each fluidic line 35 is fluidly isolated from corresponding fluidic line 44, i.e. the gas coming out from each article 2 along respective fluidic line 44 is prevented from reaching corresponding fluidic lines 35.

As it will be evident from the following of the present description, fluidic lines 35, 44 are not required to be physically isolated from one another, but a preferential flow of the gas contained in upper portion 8 of tank 6 is established (as indicated by arrows in Figure 1) :
- from portion 8 of tank 6 towards inner volume of articles 2 along respective fluidic lines 35 before the contact filling of articles 2; and
- from inner volume of articles 2 towards discharge 55 and along respective fluidic lines 44 during the contact filling of articles 2.

In greater detail, fluidic lines 44 comprises, proceeding from the inner volume of relative articles 2 towards discharge 55,:
- relative ducts 18b of respective filling device 10 and which are in fluidic communication with the inner volume of relative articles 2, during the contact filling of articles 2;
- relative portions 47 associated to respective filling devices 10 and which originate from openings 32 of relative ducts 18b;
- a return gas chamber 48, which is common to all filling devices 10; and
- a portion 49, which is common to all filling devices 10 and which extends from return gas chamber 48 to pressurization chamber 40.

Each valve 46 is, in the embodiment shown, interposed along a relative portion 47 of the corresponding fluidic line 44.

Portion 49 comprises, as of return gas chamber 48:
- a segment 56 which extends from return gas chamber 48 to connection point 61;
- a segment 57 which extends from connection point 61 to a discharge 55 distinct from tank 6; and
- a duct 60, which is interposed between pressurization chamber 40 and a connection point 61.

Filling unit 1 also comprises a modulating valve 59 which is interposed along portion 49 and adapted to generate a counter-pressure at the end of segment 57.

Furthermore, filling unit 1 comprises:
- a plurality of fluidic lines 70; and
- a plurality of valves 75 interposed along respective fluidic lines 70, and which are normally set in respective closed configurations in which they prevent the gas present in the head-spaces 85 of relative articles 2 from flowing along relative fluidic lines 70 to a drain 80.

In detail, each fluidic line 70 extends between opening 32 of duct 18c to a drain 80 at the atmospheric pressure.

Fluidic lines 70 comprise, proceeding from opening 30 of ducts 18c to drain 80,:
- respective ducts 18b defined by respective filling devices 10 and which are in fluidic connection with the head space of relative articles 3, in case of contact filling;
- respective portions 71 associated to respective filling devices 10 and starting from respective openings 32 of ducts 18c;
- a chamber 72, which is common to all filling devices 10; and
- a portion 73, which is common to all filling devices 10 and which extends from chamber 72 to drain 80.

Valves 75 are interposed between ducts 18c and respective portions 71.

Control unit 45 is programmed for keeping valves 75 in respective closed configurations.

In the embodiment shown, pressurization chamber 40, return gas chamber 48 and chamber 72 are annular about axis A.

Finally, in the embodiment shown, valves 42, 46, 75 are on-off valves.

Advantageously, filling unit 1 comprises:
- a cabinet 100 (only schematically shown in Figures 1 and 2), which encloses an inner volume 103 defining a sterile environment; and
- a fluidic line 101 (only schematically shown in Figures 1 and 2) fluidly connected with fluidic line 44; and
- a valve 102 (only schematically shown in Figures 1 and 2) arranged along fluidic line 101, and which can be selectively arranged in a first position in which it fluidly connects fluidic line 101 with inner volume 103.

In particular, valve 102 is arranged in the first position, when filling unit 1 is in an operative condition.

The expression "operative condition" indicates in the present description a condition of filling unit 1 during which filling unit 1 is active in contact filling articles 2 with still product.

Inner volume 103 preferably encloses at least in part filling devices 10, tank 6 and fluidic lines 35, 44 and 70.

Modulating valve 59 is kept closed when valve 102 in the first position. In this way, the return gas coming out from articles 2 cannot escape from discharge 55 and is forced to move from chamber 48 to chamber 40 and from chamber 40 to fluidic line 101.

Furthermore, valve 102 can be also selectively set in a second position, in which it fluidly connects fluidic line 101 with a fluidic line 104 (only partly shown in Figure 1).

Valve 102 is set in the second position, when filling unit 1 is in a further not operative condition.

The expression "not operative condition" indicates a condition of filling unit 1 during which it is idle and does not contact fill article 2 with still product. An example of "not operative condition" is a cleaning operation of filling unit 1.

In greater detail, fluidic line 104 is connected to chamber 40.

Still more precisely, fluidic line 104 is directly connected to chamber 40 and opens inside chamber 40.

Preferably, fluidic line 104 comprises:
- a portion 105, which rotates about axis A integrally with filling devices 10 and tank 6 and opens inside chamber 40; and
- a portion 106, which is stationary about axis A and along which valve 102 is interposed.

Furthermore, filling unit 1 comprises a manifold 107 interposed between portions 105, 106 so as to allow a fluid connection between rotating portion 105 and stationary portion 106.

The operation of filling unit 1 will be described with reference to the contact filling operation with a still product and with reference to only one filling device 10 and respective only one article 2 and only one gripping device 17, and to only one respective filling line 35, 44, 70 (Figure 1).

The operation of filling unit 1 will be also described starting from a condition in which:
- valve 102 is set in the first position, in which it fluidly connects fluidic lines 102, 104 with one another;
- the configuration of valve 41 is controlled by control unit 45 on the basis of the nature, e.g. the viscosity, of the pourable product, so as to achieve a desired differential pressure between the portion 7 of tank 8 and the inner volume of article 2;
- valve 59 is kept in the closed position by control unit 45, so as to fluidly isolate discharge 55 from the rest of fluidic line 44; and
- valves 72 are set in respective closed configurations.

Portion 8 of tank 6 is filled with a pressurization gas, while portion 7 of tank 6 is filled with the food product with which article 2 will be filled. In particular, the pressure of the food product inside portion 7 of tank 6 is greater than the environment pressure.

Carousel 3 is fed with empty article 2 at inlet station I, advances it along path P along which article 2 is filled with the carbonated food product and discharges the filled article 2 at outlet station O.

Gripping device 17 synchronously rotates about axis B integrally with filling device 10.

Still more precisely, gripping device 17 grips neck 12 of article 2 and moves from the lowered position to raised position at station I, and from the raised position to the lowered position at station O.

When article 2 is in the raised position, mouth 11 of article 2 is sealingly pressed against body 19 of filling device 10. Accordingly, mouth 11 is fluidly connected to opening 21 of filling device 10 and with openings 32 of ducts 18a, 18b, 18c.

As it moves along path P, filling device 10 carries out on article 2 the subsequently following operations:
- pressurization of empty article 2 with the pressurized gas so as to create a minimum differential pressure between the inner volume of article 2 and the outer environment; and
- filling of article 2 with the food product.

In greater detail, when filling device 10 is at station I, control unit 45 sets valve 41 in the open configuration and sets shutter 16 and valves 42, 46 and 75 in respective closed configurations.

During the pressurization step, control unit 45 sets valve 42 in the open configuration, thus allowing the pressurizing gas contained in portion 8 of tank 6 to flow along fluidic line 35.

In greater detail, the pressurizing gas flows from portion 8 to pressure chamber 40 along portion 36 of fluidic line 35, and from pressure chamber 40 to opening 30 of ducts 18a along portion 37 and duct 18a of the fluidic line 35.

Due to the fact that opening 30 of duct 18a and the inner volume of article 2 are in fluidic connection with cavity 31, when shutter 16 is in the closed configuration and mouth 11 of article 2 is pressed against body 19 of filling device 10, the pressurizing gas can fill and pressurize the inner volume of article 2.

When the pressurization of the inner volume of article 2 has been completed, control unit 45 sets valves 41, 42 in the closed configuration, and sets valve 46 and shutter 16 of filling device 10 in the respective open configuration.

In this way, the food product can flow through passage 24 and opening 21 inside the inner volume of article 2, thus filling the latter.

At the same time, the gas contained inside the inner volume of article 2 passes through fluidic line 44 and reaches chamber 48 through duct 60.

Due to the fact that modulating valve 59 is kept closed during the normal operation of filling unit 1, the gas contained inside the inner volume of article 2 is forced to reach chamber 40 and fluidic line 101, without flowing along portion 49 and reaching discharge 55.

Thanks to the fact that valve 102 is in the first configuration, the gas contained in the inner volume of article 2 is discharge inside cabinet 103 into the sterile environment.

When sensor 29 has detected that the desired amount of pourable product has filled article 2, control unit 45 sets shutter 16 and valve 42 in the closed configuration.

In case filling unit 1 is to be switched to a different operative conditions in which the filling of articles 2 is no longer carried out, e.g. a cleaning operative condition, control unit 45 sets valve 102 in a further position, in which it fluidly connects fluidic line 101 with fluidic line 104 outside cabinet 100.

From an analysis of the features of filling unit 1 according to the present invention, the advantages it allows to obtain are apparent.

In particular, fluidic line 44 allows the escape of the gas during the contact filling of articles 2 is in fluidic connection with fluidic line 101. In this way, the gas is discharged, by means of valve 102, inside cabinet 100.

Due to the fact that cabinet 100 defines an enclosed sterile environment, the contaminant agents are preventing from entering articles 2 and tank 6 and, therefore, from contaminating the pourable product contained therein.

Filling unit 1 therefore allows to contact fill articles 2 with particularly delicate pourable product having organoleptic properties which could be affected by the contaminating agents, even though the differential pressure between fluidic line 44 and the pressure in inner volume 103 is smaller than the differential pressure normally existing in case of contact filling of carbonated products.

Furthermore, valve 41 is a modulating valve and can be controlled by control unit 45 to adjust the amount of gas which flows along fluidic line 35.

In this way, it is possible to establish a desired differential pressure between portion 8 of tank 6 and the inner volume of article 2, so as to fill articles 2 also with particularly viscous food product. This differential pressure substantial equals the sum of the pressure inside portion 8 of tank 6 and of the hydraulic head of pourable product inside portion 7 of tank 6.

Filling unit 1 allows an easy update of a filling unit, as e.g. the one shown in EP-A-2871150, adapted to either contact fill articles 2 with carbonated food product or to contactless fill articles 2 with still food product.

As a matter fact, the update only requires to provide cabinet 100, fluidic line 101 connected to chamber 40 and valve 102 interposed along fluidic line 101.

Finally, it is apparent that modifications and variants not departing from the scope of protection of the claims may be made to filling unit 1 disclosed herein.

In particular, chamber 40 can be used as return gas chamber and chamber 48 can be used as pressurization gas chamber.

Alternatively, chamber 40 (or 48) can be used both as return gas and as pressurization chamber. In this case, valve 46 (or 42) would be kept closed both during pressurizing and filling step.

Furthermore, filling unit 1 could not comprise loss 62 or not comprise loss 63.

## Claims

1. A filling unit (1) for contact filling an article (2) with a still pourable product, comprising:
- a tank (6) comprising, in turn, a first region (7) fillable with said pourable product and a second region (8) fillable with a first aeriform;
- at least one filling device (10) for contact filling a respective at least one said article (2);
- at least one first valve (16), which may be set either in a first open configuration in which it allows the fluidic connection between said first region (7) of said tank (6) and said article (2), so as to fill said article (2) with said pourable product, or in a first closed configuration in which it prevents the fluidic connection between said first region (7) and said article (2);
- at least one first fluidic line (44) partly defined by said filling device (10) for allowing the escape of a second aeriform contained inside said article (2) when said first valve (16) is, in use, in said first open configuration and said article (2) is in contact with said filling device (10) ;
- at least one second valve (46), which can be selectively set either in a second open configuration in which it allows said second aeriform to flow along said first fluidic line (44) when said first valve (16) is, in use, in said first open configuration or in a second closed configuration in which it prevents said second aeriform from flowing along said first fluidic line (44);
wherein the unit (1) comprises:
- a cabinet (100) enclosing an inner volume (103), which defines a sterile environment;
- a second fluidic line (101) fluidly connected with said first fluidic line (44) for allowing the escape of said second aeriform contained inside said article (2) during filling of said article (2) in contact with said filling device (10); and
- a third valve (102) arranged along said second fluidic line (101), and which can be selectively arranged in a third configuration in which it fluidly connects said second fluidic line (101) with said inner volume (103) of said cabinet (100) for discharging said second aeriform inside said sterile environment defined by said cabinet (100);
wherein the unit (1) comprises:
- a plurality of said filling devices (10); and
- a common first chamber (48) which is fluidly connected to said first fluidic lines (44) of at least two said filling devices (10) downstream of said relative second valves (46) with reference to an escaping direction of said second aeriform from said articles (2), so as to collect said second aeriform coming out, in use, from said articles (2);
said second fluidic line (101) being fluidly connected with said first chamber (48);
wherein the unit (1) comprises:
- at least one third fluidic line (37) partly defined by said filling device (10) and fluidly connected with said tank (6), for allowing the pressurization of the inner volume of said article (2) with said first aeriform contained inside said tank (6), when said first valve (16) is, in use, in said first closed configuration;
- at least one fourth valve (42), which can be selectively arranged either in a fourth open configuration in which it allows said first aeriform to flow along said third fluidic line (37) or in a fourth closed configuration in which it prevents said first aeriform from flowing along said third fluidic line (37); and
- a common second chamber (40) fluidly interposed between said tank (6) and fourth valve (42; 46) and adapted to be filled, in use, with the aeriform contained in said tank (6);
said second chamber (40) being fluidly connected with said first chamber (48) and with said second fluidic line (101);
said second chamber (40) being fluidly connected with said first chamber (48) by a segment (56) extending outside said tank (6);
wherein
- said second fluidic line (101) directly opens inside said second chamber (40);
- said filling device (10) is rotatable about an axis (A) ;
said second fluidic line (101) comprises:
- a first portion (105) rotatable about axis (A) together with said filling device (10) and fluidly connected to said first fluidic line (44); and
- a second portion (106) fixed relative to said axis (A) and along which said third valve (102) is arranged;
said filling station (1) comprising a manifold (107) for fluidly coupling said first portion (105) and said second portion.

2. The filling unit of claim 1, **characterized by** comprising a fifth modulating valve (41) arranged along said third fluidic line (35) in a position interposed between said tank (6) and said second chamber (40);
said fifth valve (41) being a modulating valve controllable so as to adjust the pressure inside said second region (8) of said tank (6).

3. The filling unit of any one of the foregoing claims, **characterized in that** said third valve (102) can be selectively set in a further configuration, in which it fluidly disconnects said second fluidic line (101) and said inner volume (103) of said cabinet (100).

4. The filling unit of any one of the foregoing claims, **characterized by** comprising:
- an exhaust (55) fluidly connected with said first fluidic line (44); and
- a sixth control valve (59) which is arranged along a segment (57) fluidly connected to said first fluidic line (44) and which can be selectively arranged either in a fourth open configuration or in a fourth closed configuration;
said sixth control valve (59) allowing, when set in said fourth open configuration, the flow of said first aeriform along said segment (57) and up to said exhaust (55);
said sixth control valve (59) preventing, when set in said fourth closed configuration, said flow of said first aeriform along said segment (57) and up to said exhaust (55);
said fourth control valve (59) being set, in use, in said fourth closed configuration when said first valve (16) is set, in use, in said first open configuration.

5. The filling unit of any one of the foregoing claims, **characterized in that** said third valve (102) can be selectively arranged in a further configuration, in which it fluidly connects said second fluidic line (101) with a further fluidic line (104);
said third valve (102) being arranged in said third configuration when said filling unit (1) is, in use, in a normal operative condition, and being arranged in in said further configuration when said filling unit (1) is, in use, in a further not operative condition.

## Patentansprüche

1. Fülleinheit (1) zum kontaktbehafteten Füllen eines Artikels (2) mit einem noch fließfähigen Produkt, umfassend:
- einen Tank (6), der wiederum eine erste Region (7), die mit dem noch fließfähigen Produkt füllbar ist, und eine zweite Region (8), die mit einem ersten gasförmigen Stoff füllbar ist, umfasst; und
- mindestens eine Füllvorrichtung (10) zum kontaktbehafteten Füllen eines jeweiligen mindestens einen solchen Artikels (2);
- mindestens ein erstes Ventil (16), das entweder in eine erste geöffnete Konfiguration, in der es die Fluidverbindung zwischen der ersten Region (7) des Tanks (6) und dem Artikel (2) gestattet, um so den Artikel (2) mit dem fließfähigen Produkt zu füllen, oder in eine erste geschlossene Konfiguration, in der es die Fluidverbindung zwischen der ersten Region (7) und dem Artikel (2) verhindert, eingestellt wird;
- mindestens eine erste Fluidleitung (44), die teilweise durch die Füllvorrichtung (10) zum Gestatten des Entweichens eines in dem Artikel (2) enthaltenen zweiten gasförmigen Stoffes, wenn sich das erste Ventil (16) im Gebrauch in der ersten, geöffneten Konfiguration befindet und der Artikel (2) mit der Füllvorrichtung (10) in Kontakt steht, definiert wird;
- mindestens ein zweites Ventil (46), das selektiv entweder in eine zweite geöffnete Konfiguration, in der es ein Fließen des zweiten gasförmigen Stoffes entlang der ersten Fluidleitung (44) gestattet, wenn sich das erste Ventil (16) im Gebrauch in der ersten geöffneten Konfiguration befindet, oder in eine zweite geschlossene Konfiguration, in der es verhindert, dass der zweite gasförmige Stoff entlang der ersten Fluidleitung (44) fließt, eingestellt werden kann;
wobei die Einheit (1) Folgendes umfasst:
- einen Schrank (100), der ein Innenvolumen (103), das eine sterile Umgebung definiert, umschließt;
- eine zweite Fluidleitung (101), die mit der ersten Fluidleitung (44) fluidisch verbunden ist, um das Entweichen des in dem Artikel (2) enthaltenen zweiten gasförmigen Stoffes während des Füllens des mit der Füllvorrichtung (10) in Kontakt stehenden Artikels (2) zu gestatten; und
- ein drittes Ventil (102), das entlang der zweiten Fluidleitung (101) angeordnet ist und das selektiv in einer dritten Konfiguration angeordnet werden kann, in der es die zweite Fluidleitung (101) mit dem Innenvolumen (103) des Schranks (100) fluidisch verbindet, um den zweiten gasförmigen Stoff innerhalb der durch den Schrank (100) definierten sterilen Umgebung abzulassen;
wobei die Einheit (1) Folgendes umfasst:
- mehrere der Füllvorrichtungen (10); und
- eine gemeinsame erste Kammer (48), die mit den ersten Fluidleitungen (44) von mindestens zwei der Füllvorrichtungen (10) stromabwärts der jeweiligen zweiten Ventile (46) bezüglich einer Entweichrichtung des zweiten gasförmigen Stoffes aus den Artikeln (2) fluidisch verbunden ist, um den im Gebrauch aus den Artikeln (2) herauskommenden gasförmigen Stoff aufzufangen;
wobei die zweite Fluidleitung (101) mit der ersten Kammer (48) fluidisch verbunden ist;
wobei die Einheit (1) Folgendes umfasst:
- mindestens eine dritte Fluidleitung (37), die teilweise durch die Füllvorrichtung (10) definiert wird und mit dem Tank (6) fluidisch verbunden ist, um eine Druckbeaufschlagung des Innenvolumens des Artikels (2) mit dem in dem Tank (6) enthaltenen ersten gasförmigen Stoff zu gestatten, wenn sich das erste Ventil (16) im Gebrauch in der ersten geschlossenen Konfiguration befindet;
- mindestens ein viertes Ventil (42), das selektiv entweder in einer vierten geöffneten Konfiguration, in der es ein Fließen des ersten gasförmigen Stoffes entlang der dritten Fluidleitung (37) gestattet, oder in einer vierten geschlossenen Konfiguration, in der es ein Fließen des gasförmigen Stoffes entlang der dritten Fluidleitung (37) verhindert, angeordnet werden kann; und
- eine gemeinsame zweite Kammer (40), die zwischen dem Tank (6) und dem vierten Ventil (42; 46) fluidisch angeordnet ist und dazu ausgeführt ist, im Gebrauch mit dem in dem Tank (6) enthaltenen gasförmigen Stoff gefüllt zu werden;
wobei die zweite Kammer (40) mit der ersten Kammer (48) und mit der zweiten Fluidleitung (101) fluidisch verbunden ist;
wobei
- die zweite Kammer (40) durch ein sich außerhalb des Tanks (6) erstreckendes Segment (56) mit der ersten Kammer (48) fluidisch verbunden ist; wobei
- die zweite Fluidleitung (101) direkt in der zweiten Kammer (40) mündet;
- die Füllvorrichtung (10) um eine Achse (A) drehbar ist;
die zweite Fluidleitung (101) Folgendes umfasst:
- einen ersten Teil (105), der zusammen mit der Füllvorrichtung (10) um die Achse (A) drehbar und mit der erste Fluidleitung (44) fluidisch verbunden ist; und
- einen zweiten Teil (106), der bezüglich der Achse (A) fixiert ist und entlang dem das dritte Ventil (102) angeordnet ist;
wobei die Füllstation (1) einen Verteiler (107) zur Fluidkopplung des ersten Teils (105) und des zweiten Teils umfasst.

2. Fülleinheit nach Anspruch 1, **dadurch gekennzeichnet, dass** sie ein fünftes Modulationsventil (41) umfasst, das entlang der dritten Fluidleitung (35) in einer zwischen dem Tank (6) und der zweiten Kammer (40) liegenden Position angeordnet ist;
wobei das fünfte Ventil (41) ein Modulationsventil ist, das dahingehend steuerbar ist, den Druck innerhalb der zweiten Region (8) des Tanks (6) einzustellen.

3. Fülleinheit nach einem der vorhergehenden Ansprüche, **dadurch gekennzeichnet, dass** das dritte Ventil (102) selektiv in einer weiteren Konfiguration, in der es die zweite Fluidleitung (101) und das Innenvolumen (103) des Schranks (100) fluidisch trennt, eingestellt werden kann.

4. Fülleinheit nach einem der vorhergehenden Ansprüche, **dadurch gekennzeichnet, dass** sie Folgendes umfasst:
- einen Auslass (55), der mit der ersten Fluidleitung (44) fluidisch verbunden ist; und
- ein sechstes Steuerventil (59), das entlang einem Segment (57), das mit der ersten Fluidleitung (44) fluidisch verbunden ist und das selektiv entweder in einer vierten geöffneten Konfiguration oder in einer vierten geschlossenen Konfiguration angeordnet werden kann;
wobei das sechste Steuerventil (59), wenn es in der vierten geöffneten Konfiguration eingestellt ist, den Fluss des ersten gasförmigen Stoffes entlang dem Segment (57) und bis zu dem Auslass (55) gestattet; wobei das sechste Steuerventil (59), wenn es in der vierten geschlossenen Konfiguration eingestellt ist, den Fluss des ersten gasförmigen Stoffes entlang dem Segment (57) und bis zu dem Auslass (55) verhindert;
wobei das vierte Steuerventil (59) im Gebrauch in der vierten geschlossenen Konfiguration eingestellt ist, wenn das erste Ventil (16) im Gebrauch in der ersten geöffneten Konfiguration eingestellt ist.

5. Fülleinheit nach einem der vorhergehenden Ansprüche, **dadurch gekennzeichnet, dass** das dritte Ventil (102) selektiv in einer weiteren Konfiguration, in der es die zweite Fluidleitung (101) mit einer weiteren Fluidleitung (104) fluidisch verbindet, angeordnet werden kann;
wobei das dritte Ventil (102) in der dritten Konfiguration angeordnet ist, wenn sich die Fülleinheit (1) im Gebrauch in einem Normalbetriebszustand befindet, und in der weiteren Konfiguration angeordnet ist, wenn sich die Fülleinheit (1) im Gebrauch in einem weiteren Nichtbetriebszustand befindet.

## Revendications

1. Unité de remplissage (1) pour un remplissage par contact d'un article (2) avec un produit plat versable, comprenant :
un réservoir (6) comprenant à son tour une première région (7) pouvant être remplie dudit produit versable et une seconde région (8) pouvant être remplie d'un premier produit aériforme ;
au moins un dispositif de remplissage (10) pour remplir par contact au moins un dit article (2) respectif ;
au moins une première valve (16), qui peut être placée soit dans une première configuration ouverte dans laquelle elle permet la liaison fluidique entre ladite première région (7) dudit réservoir (6) et ledit article (2), de façon à remplir ledit article (2) dudit produit versable, soit dans une première configuration fermée dans laquelle elle empêche la liaison fluidique entre ladite première région (7) et ledit article (2) ;
au moins une première ligne fluidique (44) définie en partie par ledit dispositif de remplissage (10) pour permettre l'échappement d'un second produit aériforme contenu à l'intérieur dudit article (2) lorsque ladite première valve (16) est, en utilisation, dans ladite première configuration ouverte et ledit article (2) est en contact avec ledit dispositif de remplissage (10) ;
au moins une deuxième valve (46), qui peut être placée sélectivement soit dans une deuxième configuration ouverte dans laquelle elle permet audit second produit aériforme de s'écouler le long de ladite première ligne fluidique (44) lorsque ladite première valve (16) est, en utilisation, dans ladite première configuration ouverte, soit dans une deuxième configuration fermée dans laquelle elle empêche ledit second produit aériforme de s'écouler le long de ladite première ligne fluidique (44) ;
l'unité (1) comprenant :
un boîtier (100) entourant un volume intérieur (103), qui définit un environnement stérile ;
une deuxième ligne fluidique (101) en liaison fluidique avec ladite première ligne fluidique (44) pour permettre l'échappement dudit second produit aériforme contenu à l'intérieur dudit article (2) pendant le remplissage dudit article (2) en contact avec ledit dispositif de remplissage (10) ; et
une troisième valve (102) disposée le long de ladite deuxième ligne fluidique (101), et qui peut être disposée de façon sélective dans une troisième configuration dans laquelle elle relie fluidiquement ladite deuxième ligne fluidique (101) et ledit volume intérieur (103) dudit boîtier (100) pour évacuer ledit second produit aériforme à l'intérieur dudit environnement stérile défini par ledit boîtier (100) ;
l'unité (1) comprenant :
une pluralité desdits dispositifs de remplissage (10) ; et
une première chambre commune (48) qui est en liaison fluidique avec lesdites premières lignes fluidiques (44) d'au moins deux desdits dispositifs de remplissage (10) en aval desdites deuxièmes valves relatives (46) par rapport à une direction d'échappement dudit second produit aériforme desdits articles (2), de façon à recueillir ledit second produit aériforme sortant, en utilisation, desdits articles (2) ;
ladite deuxième ligne fluidique (101) étant en liaison fluidique avec ladite première chambre (48) ;
l'unité (1) comprenant :
au moins une troisième ligne fluidique (37) définie en partie par ledit dispositif de remplissage (10) et en liaison fluidique avec ledit réservoir (6), pour permettre la pressurisation du volume intérieur dudit article (2) avec ledit premier produit aériforme contenu à l'intérieur dudit réservoir (6), lorsque ladite première valve (16) est, en utilisation, dans ladite première configuration fermée ;
au moins une quatrième valve (42), qui peut être disposée de façon sélective soit dans une quatrième configuration ouverte dans laquelle elle permet audit premier produit aériforme de s'écouler le long de ladite troisième ligne fluidique (37), soit dans une quatrième configuration fermée dans laquelle elle empêche ledit premier produit aériforme de s'écouler le long de ladite troisième ligne fluidique (37) ; et
une seconde chambre commune (40) interposée fluidiquement entre ledit réservoir (6) et la quatrième valve (42 ; 46) et conçue pour être remplie, en utilisation, du produit aériforme contenu dans ledit réservoir (6) ;
ladite seconde chambre (40) étant en liaison fluidique avec ladite première chambre (48) et avec ladite deuxième ligne fluidique (101) ;
ladite seconde chambre (40) étant en liaison fluidique avec ladite première chambre (48) au moyen d'un segment (56) s'étendant à l'extérieur dudit réservoir (6) ;
dans laquelle
ladite deuxième ligne fluidique (101) s'ouvre directement à l'intérieur de ladite seconde chambre (40) ;
ledit dispositif de remplissage (10) peut tourner autour d'un axe (A) ;
ladite deuxième ligne fluidique (101) comprend :
une première partie (105) pouvant tourner autour de l'axe (A) conjointement audit dispositif de remplissage (10) et étant en liaison fluidique avec ladite première ligne fluidique (44) ; et
une seconde partie (106) fixe par rapport audit axe (A) et le long de laquelle ladite troisième valve (102) est disposée ;
ladite station de remplissage (1) comprenant un collecteur (107) pour coupler fluidiquement ladite première partie (105) et ladite seconde partie.

2. Unité de remplissage selon la revendication 1, **caractérisée en ce qu'**elle comprend une cinquième valve de modulation (41) disposée le long de ladite troisième ligne fluidique (35) dans une position interposée entre ledit réservoir (6) et ladite seconde chambre (40) ;
ladite cinquième valve (41) étant une valve de modulation pouvant être commandée de façon à régler la pression à l'intérieur de ladite seconde région (8) dudit réservoir (6).

3. Unité de remplissage selon l'une quelconque des revendications précédentes, **caractérisée en ce que** ladite troisième valve (102) peut être placée de façon sélective dans une configuration supplémentaire, dans laquelle elle supprime la liaison fluidique de ladite deuxième ligne fluidique (101) et dudit volume intérieur (103) dudit boîtier (100).

4. Unité de remplissage selon l'une quelconque des revendications précédentes, **caractérisée en ce qu'**elle comprend :
une sortie d'échappement (55) en liaison fluidique avec ladite première ligne fluidique (44) ; et
une sixième valve de commande (59) qui est disposée le long d'un segment (57) en liaison fluidique avec ladite première ligne fluidique (44) et qui peut être disposée de façon sélective soit dans une quatrième configuration ouverte, soit dans une quatrième configuration fermée ;
ladite sixième valve de commande (59) permettant, lorsqu'elle est placée dans ladite quatrième configuration ouverte, l'écoulement dudit premier produit aériforme le long dudit segment (57) et jusqu'à la sortie d'échappement (55) ;
ladite sixième valve de commande (59) empêchant, lorsqu'elle est placée dans ladite quatrième configuration fermée, ledit écoulement dudit premier produit aériforme le long dudit segment (57) et jusqu'à la sortie d'échappement (55) ;
ladite quatrième valve de commande (59) étant placée, en utilisation, dans ladite quatrième configuration fermée lorsque ladite première valve (16) est placée, en utilisation, dans ladite première configuration ouverte.

5. Unité de remplissage selon l'une quelconque des revendications précédentes, **caractérisée en ce que** ladite troisième valve (102) peut être disposée de façon sélective dans une configuration supplémentaire, dans laquelle elle relie fluidiquement ladite deuxième conduite fluidique (101) à une conduite fluidique supplémentaire (104) ;
ladite troisième valve (102) étant disposée dans ladite troisième configuration lorsque ladite unité de remplissage (1) est, en utilisation, dans un état fonctionnel normal, et étant disposée dans ladite configuration supplémentaire lorsque ladite unité de remplissage (1) est, en utilisation, dans un autre état non fonctionnel.
